# EUROPÄISCHE PATENTANMELDUNG

(11) **EP 4 155 360 A1**
(43) Veröffentlichungstag der Anmeldung: **29.03.2023**
(21) Anmeldenummer: 22193400.3
(22) Anmeldetag: 01.09.2022
(51) Int. Cl.: C09J 133/06, C09J 7/38

(54) **PRIMER ZUR HERSTELLUNG EINER LÖSBAREN KLEBVERBINDUNG**

(30) Priorität: 22.09.2021 DE 102021210563
(71) Anmelder: tesa SE, 22848 Norderstedt (DE)
(72) Erfinder: BUDDE, Dr. Felix, 22848 Norderstedt (DE); KEITE-TELGENBÜSCHER, Dr. Klaus, 22848 Norderstedt (DE); CLAUSSEN, Lena, 22848 Norderstedt (DE); MOEHRKE, Claudia, 22848 Norderstedt (DE); WANG, Dr. Shuang, 22848 Norderstedt (DE)
(74) Vertreter: tesa SE

(57) **Zusammenfassung**

Primer zur Herstellung einer lösbaren Klebverbindung, wobei der Primer auf einem Haftklebstoff basiert, der ein chemisches oder physikalisches Treibmittel umfasst.

## Beschreibung

Die vorliegende Erfindung betrifft einen Primer zur Herstellung einer lösbaren Klebverbindung sowie einen lösbaren Schichtkörper, ausgebildet und eingerichtet, um nach dauerhafter Verklebung getrennt zu werden. Des Weiteren umfasst die vorliegende Erfindung ein Verfahren zum Lösen einer mittels eines solchen Schichtkörpers bewirkten dauerhaften Verklebung.

In Repairshops beziehungsweise im End-of-Life-Recycling von elektronischen Geräten gewinnt der Wunsch, elektronische Geräte oder auch Automobile reparieren beziehungsweise möglichst weitgehend demontieren und/oder recyceln zu können, aus ökologischen, aber auch aus auch ökonomischen Gründen an Bedeutung.

Es existieren dabei unterschiedliche Arten von elektronischen Geräten, die sich in ihrer Recyclingfähigkeit und auch im Recyclinggrad unterscheiden:
- Haushaltsgroßgeräte (auch weiße Ware genannt): zum Beispiel Waschmaschinen, Kühl- und Gefrierschränke, Herde;
- Haushaltskleingeräte (ebenfalls zur weißen Ware zählend): zum Beispiel Staubsauger, Kaffeemaschinen, Mikrowellen;
- Informations- und Kommunikationstechnik-Geräte: zum Beispiel Computer, Monitore, Drucker, Handys, Telefone;
- Unterhaltungselektronik-Geräte (auch braune Ware genannt): zum Beispiel Fernseher, Videorecorder, Digitalkameras;

Gerade Elektro- und Elektronikgeräte enthalten eine Vielzahl von Stoffen und Materialien. Werden Elektro- und Elektronik-Altgeräte nicht sachgerecht, das heißt zum Beispiel über den Hausmüll entsorgt, kann es aufgrund der zum Teil noch enthaltenen Schadstoffe zu Umweltrisiken kommen. Neben Schadstoffen wie Schwermetallen und FCKW enthalten Elektro- und Elektronik-Altgeräte aber auch eine Reihe von Wertstoffen, die es zurückzugewinnen und somit im Kreislauf zu führen gilt. Werden Elektro- und Elektronik-Altgeräte demgegenüber sachgerecht entsorgt, können so Primärrohstoffe (und damit deren aufwändige Gewinnung) ersetzt und ein wesentlicher Beitrag zur Schonung der natürlichen Ressourcen geleistet werden.

Um diese Ziele erreichen zu können, legt in Deutschland das Gesetz über das Inverkehrbringen, die Rücknahme und die umweltverträgliche Entsorgung von Elektro- und Elektronikgeräten (Elektro- und Elektronikgerätegesetz - ElektroG) in Umsetzung der Richtlinie 2012/19/EU über Elektro- und Elektronik-Altgeräte (so genannte WEEE) konkrete Pflichten für alle relevanten Akteure (Hersteller, Handel, Kommunen, Besitzer, Entsorger) fest. Durch Abfallvermeidung, zumutbare Prüfungen zu Möglichkeiten einer Vorbereitung zur Wiederverwendung ganzer Geräte oder einzelner Bauteile sowie Anforderungen an die weitergehende Verwertung von Abfällen soll ein wesentlicher Beitrag zur Schonung der natürlichen Ressourcen und zur Verringerung der Schadstoffemissionen erzielt werden.

Entsprechende recycling-freundliche Designs sind notwendig, die eine Demontage bei Bedarf (debonding on demand) ermöglichen. Zu den recycling-freundlichen Designs zählen auch wiederlösbare Klebeverbindungen, denn gerade in elektronischen Kleingeräten nimmt die Tendenz, Teile üblicherweise dauerhaft zu verkleben statt mechanisch lösbar zu verbinden, sehr stark zu.

Die EP 1 814 935 A1 beschreibt ein Verfahren zum Zusammenfügen zweier Substrate mittels Kleben mit mindestens einer Fugendichtung, welche aus einem Polymerwerkstoff und einem Migrationsstoff besteht, wobei dieser fähig ist, an die Grenzfläche zu migrieren, um eine Schicht mit schwacher Kohäsion zu bilden.

Des Weiteren beschreibt es ein Verfahren zum Lösen der zuvor hergestellten Verbindung durch Zuführen von Energie in die Fugendichtung bzw. den Migrationsstoff. Der Migrationsstoff wandert an die Grenzfläche und bewirkt eine Lage mit einer schwachen Kohäsion, wodurch das Trennen der Substrate ermöglicht wird.

Es wird kein Primer offenbart. Es handelt sich um einen Klebstoff, welcher ein Migrationsmittel, welches an die Grenzfläche wandert, enthält. Ein Haftklebeband wird nicht offenbart.

Die WO 00/75254 A1 betrifft eine Zusammensetzung, ihre Verwendung und ein Verfahren zu ihrer Verwendung als Verglasungsklebstoff. Die Zusammensetzung umfasst einen Klebstoff mit darin dispergierten thermoexpandierbaren Mikrokapseln, die als Druckauslöser wirken. Die Mikrokapseln werden durch Wärme ausgelöst, so dass mindestens ein expandierbarer flüchtiger Wirkstoff, der in der Mikrokapselhülle eingekapselt ist, freigesetzt wird.

Die EP 2 265 681 A1 beschreibt eine Zusammensetzung zum Lösen einer Verklebung zwischen zwei Substraten. Die Zusammensetzung besteht aus einem adhäsiven Basispolymer und einem Wirkstoff, der zum Lösen des Verbundes vorgesehen ist. Der Wirkstoff ist in Wachs verkapselt.

Bei der Verkapselung handelt es sich um ein Mikroverkapselung, thermisches Gelieren oder andere genannten Verfahren.

Die WO 2005/028583 A1 betrifft ein Destrukturierungsmittel (3 bis 40 Gew-%) für eine Klebstoffzusammensetzung. Bei der Polymerbasis handelt es sich um Epoxy-, Acryl- oder Urethantypen. Die Destrukturierungsmittel sind durch Wärme aktivierbar und aus der Familie der Hydrazide (insbesondere pTSH) und besonders die Sulfohydrazide.

Des Weiteren wird ein Aktivator (1 bis 5 Gew-%) aus der Familie der Carbamide verwendet (insbesondere Urea). Es wird noch der Zusammenhang zwischen Viskosität und angestrebter Schichtdicke erwähnt.

Aus der EP 1 111 020 A1 sind Klebstoffzusammensetzungen für lösbare Klebeverbindungen bekannt, wobei diese bei Raumtemperatur feste, thermisch aktivierbare Substanzen zum Entkleben enthalten.

Der Zusatz von thermisch aktivierbaren Substanzen aus der Gruppe von Dicarbonsäuren, Azoverbindungen, Carbonaten, kristallwasserhaltigen Substanzen sowie Polyalkoholen zu handelsüblichen Klebstoffen ermöglicht eine thermische Spaltung der Klebeverbindung. Hierdurch kann eine Verklebung durch Wärme wieder leicht gelöst werden, was ein Recycling der verklebten Bauteile erleichtert.

Die EP 1 611 217 A1 beschreibt ein Verfahren zum Zusammenfügen zweier Träger durch Kleben mit einer Verbindung. Dazu wird auf einen Träger ein Haftprimer zum gesteuerten Abnehmen aufgebracht. Dieser besteht aus einer Polymergundlage und einem Mittel zur Degradation der Bindung. Das Lösen der Klebeverbindung erfolgt durch Zuführen von Energie, so dass das Degradationsmittel die Bindung von Primer und Träger oder die Masse degradiert wird.

Der Primer kann verdünnt vorliegen, um besonders dünne Schichten aufzubringen. Der Primer besteht aus Polymergrundlage oder einem Wachs und einem Degradationsmittel. Das Degradationsmittel ist pTSH. Als Polymergrundlage für den Primer wird ausschließlich Epoxidharz offenbart. Lösemittel ist Toluol.

Die FR 2837114 A1 beschreibt ein Verfahren (bestehend aus fünf Phasen) zum Lösen einer Beschichtung, welche einen Zusatzstoff enthält, durch Zuführen thermischer oder elektromagnetischer Energie.

Die fünf Phasen sind:
- Phase 1 (Formulierung) - Zusatzstoff und Klebstoff
- Phase 2 (Konditionierung)
- Phase 3 (Implementierung der Formulierung) - Herstellung Verbindung
- Phase 4 (Betriebsphase)
- Phase 5 (kontrollierte Trennphase)

Mit der EP 2 519 596 A1 ist ein Verfahren zum Zerlegen eines Verbundes bekannt geworden, bestehend aus zwei Substraten, welche durch eine Verbindungsschicht verklebt sind. Das Polymermaterial für die Verbindungsschicht besteht aus Polyurethan oder Silikon und enthält einen Migrationsstoff, der zu einer der Grenzflächen migriert und das Ablösen einer Grenzfläche durch Einwirkung von Wärme bewirkt. Es muss auf die Aktivierungstemperatur des Migrationsstoffes erwärmt werden. Das Ablösen wird durch das erzeugte Gas herbeigeführt.

Die WO 2021/028457 A1 beschreibt eine entfernbare Zusammensetzung die aus einem oder einem Gemisch von in Alkohol löslichen Polyamid(en), einem expandierbaren Additiv dessen Expansionstemperatur höher ist als der Schmelzpunkt des Polyamids.

Der Alkohol wird gewählt aus leichten aliphatischen Alkoholen oder Benzylalkohol.

Das in Alkohol lösbare Polyamid ist ein Copolyamid.

Das expandierbare Additiv können temperaturakivierbare expandierbare Mikrosphären, Azodicarbonamide, expandierbarer Graphit, Polycarboxylsäuren und Sulfonylhydrazide sein. Die Verhältnisse von Polymer und Additiv werden beschrieben.

Die Schrift beschreibt einen durch Mikroballons schäumbaren Primer zum leichten Entfernen von ungewünschter Farbe. Die Basis besteht aus einem Acrylat Harz oder Polyvinylacetat. Die Substanzen sind thermisch expandierbar durch Temperatur.

Aufgabe der vorliegenden Erfindung ist es daher, einen Primer für einen Schichtkörper zur Verfügung zu stellen, der einerseits eine dauerhafte und sichere Verklebung eines Bauteils mit einem Klebeband ermöglicht, andererseits im Bedarfsfall jedoch eine saubere und sichere Trennung des Klebebands vom Bauteil ermöglicht.

Die Aufgabe wird erfindungsgemäß durch einen Primer gelöst, wie er in Anspruch 1 beschrieben ist. Vorteilhafte Ausführungsformen des Primers sind in den Unteransprüchen wiedergegeben. Des Weiteren gehören zur erfindungsgemäßen Lösung ein Schichtkörper mit dem Primer sowie ein Verfahren zum Lösen des Schichtkörpers.

Demgemäß betrifft die vorliegende Erfindung einen Primer zur Herstellung einer lösbaren Klebverbindung, wobei der Primer auf einem Haftklebstoff basiert, der ein chemisches oder physikalisches Treibmittel umfasst.

Im erfindungsgemäßen Sinne bedeutet der Begriff Primer eine auf einem Substrat aufgetragene Grundierung, die in der Lage ist (entweder auf chemischer oder physikalischer Grundlage), mit zwei Materialschichten zu interagieren und deren Haftung zu ermöglichen. Das heißt, die Haftung ohne Verwendung eines Primers nicht wesentlich zu beeinträchtigen, aber nicht notwendigerweise, diese zu verbessern. Nicht wesentlich zu beeinträchtigen bedeutet, dass die Klebkraft zweier Materialschichten zueinander mit Primer nicht weniger als 75 % der Klebkraft der Materialschichten zueinander ohne Primer beträgt.

Der Primer wird in der Regel als ein formuliertes Produkt (das in der Regel mehr als eine Komponente enthält) betrachtet, das nach einem bestimmten Verfahren aus der flüssigen Phase aufgetragen wird (Eintauchen in die Oberfläche, Streichen, Sprühen usw.). Nach dieser Definition sollte der Primer nicht nur die Fähigkeit haben, die Haftung zu ermöglichen, sondern auch eine gleichmäßige Grundierungsschicht auf der Oberfläche des Substrats zu bilden, indem seine Viskosität, seine Benetzungseigenschaften, seine Trocknungsgeschwindigkeit usw. angepasst werden.

Erfindungsgemäß ist der Primer auf der Basis eines Haftklebstoffs formuliert und enthält ein chemisches oder physikalisches Treibmittel, welches nach Aktivierung das Lösen der Klebverbindung ermöglicht

"Auf der Basis von" oder "auf der Grundlage von" bedeutet vorliegend, dass die Eigenschaften des Primers von der Haftklebemasse bestimmt werden. Das heißt, das Basispolymer des Primers weist eine gewisse Haftklebrigkeit auf.

Unter einer "Haftklebmasse" wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Über-tragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23 °C, im Deformationsfrequenzbereich von 10⁰ bis 10¹ rad/sec G' zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10° bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Haftklebstoffe wirken somit bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Haftklebestoffe beruht auf ihren adhäsiven Eigenschaften und die Wiederablösbarkeit - abhängig von der der Haftklebemasse innewohnenden Klebkraft - auf ihren kohäsiven Eigenschaften.

Eine Klebverbindung ist im Rahmen der vorliegenden Erfindung beispielsweise und insbesondere "lösbar", wenn durch den erfindungsgemäßen Primer nach dessen Aktivierung eine Herabsetzung der Klebkraft bei 23 °C von zumindest 50 % erfolgt, bevorzugt von zumindest 75 % erfolgt.

Als Haftklebemasse für den Primer können alle dem Fachmann bekannten Haftklebemassen eingesetzt werden, also zum Beispiel solche auf der Basis von Acrylaten und/oder Methacrylaten, Polyurethanen, Naturkautschuken, Synthesekautschuken, Styrolblockcopolymermassen mit einem Elastomerblock aus ungesättigten oder hydrierten Polydienblöcken (Polybutadien, Polyisopren, Copolymeren aus beiden sowie weitere, dem Fachmann geläufige Elastomerblöcke), Polyolefinen, Fluorpolymeren und/oder Silikonen. Darunter fallen auch weitere Massen, die haftklebende Eigenschaften entsprechend dem "Handbook of Pressure Sensitive Adhesive Technology" von Donatas Satas (Satas & Associates, Warwick 1999) besitzen.

Bevorzugt basiert der Haftklebstoff des Primers auf Acrylaten.

Wird im Rahmen dieser Schrift von Haftklebemassen auf Acrylatbasis gesprochen, so seien hiervon auch ohne explizite Erwähnung Haftklebemassen auf Basis von Methacrylaten und auf Basis von Acrylaten und Methacrylaten umfasst, sofern nicht ausdrücklich anders beschrieben. Ebenfalls im Sinne der Erfindung sind Kombinationen und Blends mehrerer Basispolymere sowie mit Klebharzen, Füllstoffen, Alterungsschutzmitteln und Vernetzern additivierte Klebemassen, wobei die Aufzählung der Additive nur beispielhaft und nicht einschränkend zu verstehen ist.

Besonders bevorzugt umfasst der Haftklebstoff ein Copolymer auf der Basis von Acrylsäureestern.

Ganz besonders bevorzugt ist der Haftklebstoff ein Copolymer von zumindest einem Acrylsäureester mit Vinylcaprolactam.

Weiter vorzugsweise ist der Haftklebstoff frei von Acrylsäure.

Der Primer ist durch das chemische oder physikalische Treibmittel expandierbar. Expandierbar bedeutet dabei, dass das Volumen des Primers nach der Expansion oberhalb dessen des Primers vor der Expansion liegt, gemessen jeweils bei gleicher Temperatur (in der Regel Raumtemperatur). Bevorzugt liegt die Volumenzunahme bei mehr als 5 %, besonders bevorzugt mehr als 20 %. Die Expansion kann chemisch oder physikalisch erfolgen. Bevorzugt umfasst die Klebemasse ein thermisch aktivierbares Schäumungsmittel.

Das Treibmittel liegt in der Zusammensetzung des Primers bevorzugt in einer Konzentration von 10 Gew.-% bis zu 120 Gew.-% bezogen auf 100 Gew.-% an enthaltenen Basispolymer(en) vor.

Bevorzugt handelt es sich bei dem Treibmittel um ein partikuläres Treibmittel. Bevorzugt liegt die mittlere Partikelgröße (d50) vor der Aktivierung unterhalb von 25 µm, insbesondere bevorzugt unterhalb von 17 µm. Ganz besonders bevorzugt liegt die mittlere Partikelgröße unterhalb von 3 µm, da somit eine dünne Primerschicht erreicht werden kann.

Weiter bevorzugt liegt die Partikelgröße oberhalb von 500 nm, damit ein für das Ablösen technisch nutzbarer Schäumungseffekt erreicht werden kann.

Unter "Partikeln" des Treibmittels werden im Sinne von DIN 53206-1: 1972-08 Primärteilchen, Aggregate und Agglomerate des Treibmittels verstanden. Unter der "Partikelgröße" wird die maximale Ausdehnung eines Partikels verstanden. Die Bestimmung der Partikelgröße erfolgt bevorzugt mittels Laserbeugung nach ISO 13320 (wobei im Dispersionsschritt Agglomerate dispergiert werden, nicht jedoch Aggregate), aber auch andere dem Fachmann bekannte Verfahren sind geeignet.

Bevorzugt liegt das Treibmittel, insbesondere das partikuläre Treibmittel, in der getrockneten, nicht aktivierten Primerschicht im Wesentlichen in mehreren, zumindest zwei, gepackten Lagen vor. Durch die Packung wird die Expansion und damit die Trennbarkeit des Klebverbund verbessert.

Weiter bevorzugt liegt das Treibmittel, insbesondere das partikuläre Treibmittel, in der getrockneten, nicht aktivierten Primerschicht im Wesentlichen in einer Lage vor. Durch die Beschränkung auf eine Lage kann die Primerschicht dünner aufgetragen werden, was Vorteile in der Applikation (z.B. kürzere Ablüftzeiten, weniger Verfließen) und der Primerwirkung ergibt.

Im Wesentlichen bedeutet hier, dass die jeweilige Anordnung der Partikel auf mehr als 60 % der mit Primer beschichteten Fläche gegeben ist.

Bevorzugt enthält der Primer ein Rheologieadditiv, dass das Absetzen eines partikulären Treibmittels vermindert.

Als rheologische Additive werden Thixotropiermittel bevorzugt, wie sie zum Beispiel von den Firmen Erbslöh unter der Marke Disparlon und der Firma BYK unter den Marken Tixogel. Rheobyk und BYK-GO vertrieben werden.

Die Basistypen der chemischen Treibmittel lassen sich ihrer Natur nach in organische und anorganische Verbindungen unterteilen. Legt man ihr Zersetzungsverhalten zugrunde, so unterscheidet man zwischen exothermen (1-5) und endothermen (6) Treibmitteln. Im Einzelnen handelt es sich beispielsweise um Verbindungen aus den folgenden Produktklassen:
1. Azoverbindungen:
   bevorzugt Azodicarbonsäurediamid (ADC)
2. Hydrazinderivate:
   bevorzugt p-Toluolsulfonylhydrazid (TSH)
   und p,p'-Oxibis(benzolsulfonylhydrazid) (OBSH)
3. Sulfonylsemicarbazide:
   bevorzugt p-Toluolsulfonylsemicarbazid (TSSC)
4. Tetrazole:
   bevorzugt 5-Phenyltetrazol (5-PT)
5. N-Nitrosoverbindungen:
   bevorzugt N,N'-Dinitrosopentamethylentetramin (DNPT)
6. Carbonate:
   bevorzugt Natriumhydrogencarbonat (NaHCO₃), Zinkcarbonat (ZnCO₃)

Als physikalische Treibmittel können alle dem Fachmann bekannten physikalischen Treibmittel verwendet werden.

Bevorzugt ist das Treibmittel ein physikalisches Treibmittel,
Bevorzugt werden expandierbare, thermoplastische Mikrosphären (Mikroballons), besonders bevorzugt thermisch expandierbare, thermoplastische Mikrosphären verwendet.

Expandierbare thermoplastische Mikrosphären, die eine thermoplastische Polymerschale und ein darin eingeschlossenes Treibmittel umfassen, sind kommerziell erhältlich zum Beispiel unter der Marke EXPANCEL^{®}. In solchen Mikrosphären ist das Treibmittel in der Regel eine Flüssigkeit mit einem Siedepunkt nicht höher als die Erweichungstemperatur der thermoplastischen Polymerhülle.

Die Erweichungstemperatur der Polymerhülle liegt gemäß bevorzugter Ausführungsformen innerhalb des Bereichs von 0 bis 140 °C, am meisten bevorzugt von 30 bis 100 °C. Beim Erhitzen verdampft das Treibmittel und erhöht dabei den Innendruck und gleichzeitig erweicht die Schale, was zu einer erheblichen Vergrößerung der Mikrosphären führt. Die Temperatur, bei der die Expansion beginnt, heißt Tₛₜₐᵣₜ, während die Temperatur, bei der die maximale Ausdehnung erreicht wird, als Tₘₐₓ bezeichnet wird. Tₛₜₐᵣₜ für die expandierbaren Mikrokugeln ist bevorzugt von 40 bis 140 °C, am meisten bevorzugt von 50 bis 100 °C. Tₘₐₓ der expandierbaren Mikrokugeln ist höher als Tₛₜₐᵣₜ und vorzugsweise von 80 bis 200 °C, am meisten bevorzugt von 100 bis 170 °C.

Gemäß bevorzugter Ausführungsformen weist das Treibmittel eine Expansionstemperatur von 100 bis 150 °C auf.

Gemäß besonders bevorzugter Ausführungsformen weist das Treibmittel eine Expansionsstarttemperatur von mehr als 130 °C auf, da bei höheren Erweichungstemperaturen der Polymerhülle eine bessere Haltbarkeit des getrockneten Primers festgestellt wurde.

Gemäß weiterer besonders bevorzugter Ausführungsformen weist das Treibmittel eine Expansionsstarttemperatur von weniger als 130 °C auf, da hierbei die Aktivierungstemperatur niedrig ist.

Die Expansionstemperatur ist in der Regel dem Datenblatt der Lieferanten zu entnehmen. Sie wird für expandierbare Mikrosphären mittels thermomechanischer Analyse (TMA) bei einer Aufheizrate von 20 K/min bei einer relativen Luftfeuchte von 50 % bestimmt. Für chemische Treibmittel wird der Onset einer DSC bei einer Aufheizrate von 20 K/min verwendet.

Gemäß besonders bevorzugter Ausführungsformen enthält der Primer Mikroballons, die im nicht expandierten Zustand bei 25 °C einen mittleren Durchmesser von 3 µm bis 30 µm, insbesondere von 5 µm bis 20 µm, und/oder nach Expansion einen mittleren Durchmesser von 10 µm bis 200 µm, insbesondere von 15 µm bis 90 µm, aufweisen. Der mittlere Durchmesser der nicht-expandierten Mikroballons liegt bevorzugt unterhalb der Schichtdicke des Primers.

Weiter bevorzugt ist das Treibmittel eine Mischung aus einem physikalischen und einem chemischen Treibmittel.

Weiterhin ist ein Teil der Erfindung ein Schichtkörper, umfassend
- ein erstes Bauteil,
- eine Primerschicht, die auf dem Bauteil ist,
   wobei der Primer auf einem Haftklebstoff basiert, der ein chemisches oder physikalisches Treibmittel umfasst, und aus einer flüssigen Phase in einer Schichtdicke (nach dem Trocknen) von nicht mehr als 30 µm aufgebracht wird,
- ein Klebeband, insbesondere Haftklebeband, das über die Primerschicht mit dem ersten Bauteil verbunden ist.

Die Primerschicht kann eine Schichtdicke im üblichen Bereich aufweisen, also etwa von 0,1 µm bis 100 µm.

Bevorzugt weist der Primer eine Schichtdicke von weniger als 25 µm auf, besonders bevorzugt von weniger als 15 µm.

Besonders bevorzugt weist der Primer eine Schichtdicke von mehr als 1 µm auf. Insbesondere eine Schichtdicke von mehr als 5 µm im getrockneten Zustand.

Ganz besonders bevorzugt beträgt die Schichtdicke des Primers 1 bis 10 µm, um die Schichtdicke gering zu halten, weiter 10 bis 25 µm um ein möglichst großes Expansionsvolumen zu erhalten.

Bevorzugt ist der Primer in einer geschlossenen Fläche (vollflächig) auf dem Bauteil aufgetragen.

Bevorzugt, wird der Primer mittels eines Schwamms oder eines Stiftes aufgetragen. Besonders bevorzugt wird der Primer mit einer geführten Dosierdüse aufgetragen, z.B. "EV series automated dispensing systems" der Firma Nordson EFD.

Das Klebeband kann eine Schichtdicke im üblichen Bereich aufweisen, also etwa von 2 µm bis 2000 µm.

Bevorzugt weist das Klebeband eine Schichtdicke von weniger als 300 µm auf, besonders bevorzugt von weniger als 100 µm.

Bevorzugt weist das Klebeband eine Schichtdicke von mehr als 30 µm auf, besonders bevorzugt von mehr als 100 µm.

Bevorzugt beträgt das Verhältnis der Primerschichtdicke zur Dicke des Klebebands nicht mehr als 1:10. Insbesondere nicht mehr als 1:20.

Der allgemeine Ausdruck "Klebeband" umfasst im Sinne dieser Erfindung alle flächigen Gebilde, deren Ausdehnung in zwei Raumrichtungen (x-Richtung und y-Richtung; Länge und Breite) wesentlich größer ist als in der dritten Raumrichtung (z-Richtung; Dicke) wie Folien oder Folienabschnitte, Bänder mit ausgedehnter Länge und begrenzter Breite, Bandabschnitte, Stanzlinge, Etiketten und dergleichen.

Das Klebeband kann in festen Längen wie zum Beispiel als Meterware oder aber als Endlosware auf Rollen (archimedische Spirale) zur Verfügung gestellt werden, also scheibenförmige Klebebandrollen, die in der Fachsprache als "pan-cake" bezeichnet werden.

Alternativ kann das Klebeband wie ein Textilgarn auf einen Kern aufgespult sein, dessen Länge wesentlich größer ist als die Breite des Klebebandes. Durch das Überlagern einer Rotationsbewegung des Kernes und einer axialen Bewegung des Kernes oder des Klebeband-Führungsorganes bildet das Klebeband zunächst eine erste, radial innerste Lage helixförmiger Windungen. Zum Abschluss der ersten Lage und Sprung in die zweite Lage wird bei unveränderter Rotationsbewegung die Orientierung der Axialbewegung invertiert. Zum Abschluss der zweiten Lage und Sprung in die dritte Lage wird bei weiterhin unveränderter Rotationsbewegung die Orientierung der Axialbewegung erneut invertiert, also wieder zur ursprünglichen Orientierung übergegangen. Zwischen jedem der Orientierungsumkehrpunkte bleibt der Steigungswinkel konstant. Auf diese Weise können zahlreiche Windungslagen gebildet werden, deren Windungen sich jeweils kreuzen (kreuzgewickelte Spulen).

Ein "Klebeband" umfasst ein Trägermaterial, welches ein- oder beidseitig mit einer (Haft)klebemasse versehen ist, und gegebenenfalls weitere, dazwischenliegende Schichten aufweisen kann.

Insbesondere umfasst der Ausdruck "Klebeband" im Sinne der vorliegenden Erfindung sogenannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt. Die Klebemasse kann so direkt zur Verbindung zweier Oberflächen verwendet werden. Derartige trägerlose Transferklebebänder sind erfindungsgemäß besonders bevorzugt. Mit einem solchen haftklebrigen trägerlosen Transferklebeband wird eine in Positionierung und Dosierung sehr genaue Verklebung ermöglicht.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden.

Als Trennmaterial eignet sich bevorzugt ein nicht-fusselndes Material wie eine Kunststofffolie oder ein gut verleimtes, langfaseriges Papier.

Gemäß einer weiter bevorzugten Ausführung ist das Klebeband als Klebeband mit einer aktivierbaren Klebemasse ausgeführt.

Als aktivierbare Klebemasse können grundsätzlich alle üblichen aktiviert verklebenden Klebemassensysteme zum Einsatz gelangen. Die Aktivierung erfolgt in der Regel über einen Energieeintrag, z.B. durch aktinische Strahlung, Wärme oder mechanische Energie, wie z. B. Ultraschall oder Reibung.

Hitzeaktiviert verklebende Klebemassen lassen sich grundsätzlich in zwei Kategorien einordnen: thermoplastische hitzeaktiviert verklebende Klebemassen (Schmelzkleb-stoffe) und reaktive hitzeaktiviert verklebende Klebemassen (Reaktivklebstoffe). Diese Einteilung enthält auch solche Klebemassen, die sich beiden Kategorien zuordnen lassen, nämlich reaktive thermoplastische hitzeaktiviert verklebende Klebemassen (reaktive Schmelzklebstoffe). Hitzeaktiviert verklebende Klebemassen können bei Raumtemperatur bereits haftklebend sein. Durch die Hitzeaktivierung wird die Klebfestigkeit erhöht.

Thermoplastische Klebemassen basieren auf Polymeren, die bei einem Erwärmen reversibel erweichen und während des Erkaltens wieder erstarren. Als thermoplastische Klebemassen haben sich insbesondere solche auf der Basis von Polyolefinen und Copolymeren von Polyolefinen sowie von deren säuremodifizierten Derivaten, von lonomeren, von thermoplastischen Polyurethanen, von Polyamiden sowie Polyestern und deren Copolymeren und auch von Blockcopolymeren wie Styrol-Blockcopolymeren als vorteilhaft herausgestellt.

Im Gegensatz dazu enthalten reaktive hitzeaktiviert verklebende Klebemassen reaktive Komponenten. Letztere Bestandteile werden auch als "Reaktivharze" bezeichnet, in denen durch das Erwärmen ein Vernetzungsprozess eingeleitet wird, der nach Beendigen der Vernetzungsreaktion eine dauerhafte stabile Verbindung gewährleistet. Bevorzugt enthalten derartige Klebemassen auch elastische Komponenten, zum Beispiel synthetische Nitrilkautschuke oder Stryrolblockcopolymere. Derartige elastische Komponenten verleihen der hitzeaktiviert verklebenden Klebemasse infolge ihrer hohen Fließviskosität eine auch unter Druck besonders hohe Dimensionsstabilität.

Strahlungsaktivierte Klebemassen basieren ebenfalls auf reaktiven Komponenten. Letztere Bestandteile können z.B. Polymere oder Reaktivharze umfassen, in denen durch die Bestrahlung ein Vernetzungsprozess eingeleitet wird, der nach Beendigen der Vernetzungsreaktion eine dauerhafte stabile Verbindung gewährleistet. Bevorzugt enthalten derartige Klebemassen auch elastische Komponenten, wie sie oben ausgeführt sind.

Strahlungsaktivierbare Haftklebemassen sind zu unterscheiden von strahlenvernetzten Haftklebemassen, bei denen die haftklebrigen Eigenschaften bei der Herstellung des Klebebands mittels Strahlenvernetzung eingestellt werden. Bei strahlungsaktivierbaren Haftklebemassen findet die Strahlenaktivierung bei der Applikation statt. Nach der Strahlenaktivierung ist die Klebemasse in der Regel nicht mehr haftklebrig.

Aktivierbare Haftklebebänder umfassen auch aus zwei oder mehr Klebstofffilmen zusammengefügte Haftklebebänder, wie sie in der DE 10 2013 222739 A1 offenbart werden. Diese werden durch das In-Kontakt-Bringen der zwei oder mehr Klebstofffilme aktiviert.

Gemäß einer bevorzugten Ausführungsform der Erfindung ist auf der freien Seites des Klebebands ein zweites Bauteil verklebt.

Weiter vorzugsweise kann zwischen Klebeband und zweitem Bauteil eine weitere Schicht des erfindungsgemäßen Primers aufgebracht sein.

Des Weiteren ist Teil der Erfindung ein Verfahren zum Lösen eines Schichtkörpers
- aus einem ersten Bauteil,
- aus einer Primerschicht, die auf dem Bauteil aufgebracht ist,
   wobei der Primer auf einem Haftklebstoff basiert, der ein chemisches oder physikalisches Treibmittel umfasst, und aus einer flüssigen Phase in einer Schichtdicke (nach dem Trocknen) von nicht mehr als 30 µm aufgebracht wird,
- aus einem ersten Klebeband insbesondere Haftklebeband, das über die Primerschicht mit dem ersten Bauteil verbunden ist,
   wobei der Schichtkörper erwärmt wird, bis das im Primer vorhandene Treibmittel expandiert, so dass die Klebkraft der Primerschicht soweit reduziert wird, dass das Klebeband vom Bauteil entfernbar ist.

Entfernbar bedeutet hier, dass die Klebkraft des Verbunds nach Erwärmung des Schichtkörpers weniger als 40 %, bevorzugt weniger als 20 %, besonders bevorzugt weniger als 10 % der Klebkraft vor der Erwärmung beträgt

Der Schichtkörper kann durch jegliche Form der Wärmezufuhr erwärmt werden, zum Beispiel durch Konvektion (zum Beispiel in einem Ofen, mit einem Heißluftgebläse) oder durch Strahlungswärme (zum Beispiel durch einen Infrarotstrahler oder Laserstrahlung) oder durch Wärmeleitung (zum Beispiel auf einer Heizplatte) oder durch Erzeugung von Wärme im Schichtkörper (zum Beispiel durch Induktion, elektrischen Strom, chemische Reaktion oder Mikrowellen).

Die thermische Aktivierung der Treibmittel kann durch verschiedene Techniken erfolgen, insbesondere durch berührungslose Erwärmung (zum Beispiel Induktion oder Mikrowellen) oder durch elektrische Erwärmung (Joule-Effekt) oder thermische Erwärmung (Ofen, Heizplatte, Infrarotlampe, Tunnel), Heißluft, thermischer Zerfall).

Für die Induktions- oder Mikrowellenerwärmung können insbesondere die folgenden Füllstoffe verwendet werden: PEG, Ferrite, Carbonyleisen (hochreines Eisenpulver).

Für die Erwärmung durch elektrische Leitung können insbesondere die folgenden Füllstoffe verwendet werden: mit Silber beschichtete Kupferpartikel, mit Silber beschichtete Siliziumdioxidpartikel, Graphit, Ruß, Kohlenstoff-Nanoröhrchen, Silberpartikel. Diese Füllstoffe können verwendet werden, um der erfindungsgemäßen Zusammensetzung eine ausreichende Leitfähigkeit zu verleihen, um eine Erwärmung durch den Joule-Effekt unter der Wirkung des Durchgangs eines elektrischen Stroms zu ermöglichen. Diese Ladungen können auch verwendet werden, um der erfindungsgemäßen Zusammensetzung die Aufrechterhaltung der elektrischen Leitfähigkeit innerhalb der Baugruppe zu ermöglichen, was für bestimmte Anwendungen, insbesondere für die Ableitung elektrostatischer Ladungen, notwendig sein kann.

Um die Wärmeleitung der Zusammensetzung zu verbessern, können insbesondere die folgenden Füllstoffe verwendet werden: Graphit, Metallfüllstoffe, Bornitrid, Aluminiumoxid, Aluminiumhydroxid. Diese Wärmeleitung kann in bestimmten Baugruppen notwendig sein, zum Beispiel bei der Verklebung von Heizkörpern.

Nach der thermischen Aktivierung erfolgt die Ablösung vorzugsweise bei Raumtemperatur, was vorteilhaft ist, weil sich die Materialien (insbesondere die Träger) so leichter und ohne spezielle Geräte für die Handhabung heißer Oberflächen handhaben lassen. Die Ablösung kann manuell oder automatisch erfolgen.

Durch Wärmeeinwirkung verdampft zum einen die in den Mikroballons enthaltene Flüssigkeit, zum anderen erweicht die äußere Polymerhülle. Somit dehnen sich die Kapseln irreversibel aus und expandieren dreidimensional. Die Expansion ist beendet, wenn sich der Innen- und der Außendruck ausgleichen.

Durch das Expandieren der Mikroballons oder allgemein durch die Expansion des Treibmittels werden Klebeband und Bauteil auseinandergedrückt. Gleichzeitig reduziert sich die Klebkraft, die dem Primer gegenüber dem Klebeband beziehungsweise dem Bauteil entwickelt hat.

Für den erfindungsgemäßen Schichtkörper gibt es eine große Vielzahl von Anwendungsmöglichkeiten. Ein Beispiel ist das Demontieren von Touchpanels. Angesichts der großen Bedeutung von Mobiltelefonen ist dies ein besonders wichtiger Anwendungsbereich. Auf der einen Seite ist eine sehr starke und vor allem auch dichtende Verklebung der Displays von Mobiltelefonen gewünscht. Auf der anderen Seite ist es häufig eben doch erforderlich, das Display zu entfernen. Der erfindungsgemäße Schichtkörper ist für diesen Einsatzzweck bestens geeignet.

Schließlich ist die sogenannte "Reworkability" ein Thema, das zunehmend an Bedeutung gewinnt. Beispielsweise in der Automobilindustrie steigen die Anforderungen an eine sortenreine Entsorgung der Produkte am Ende ihres Lebenszyklus. Daher ist es wichtig, dass Komponenten, die aus unterschiedlichen Materialien bestehen, vor ihrer Entsorgung wieder in die einzelnen Komponenten getrennt werden müssen, auch wenn diese Komponenten vorher "untrennbar" miteinander verbunden waren. Die vorliegende Erfindung ermöglicht eine sehr feste und dauerhafte Verbindung von unterschiedlichen Komponenten und lässt dennoch deren Trennung auf Anforderung zu.

### Messmethoden

Die Messungen werden - soweit nicht ausdrücklich anders erwähnt - bei einem Prüfklima von 23 ± 1 °C und 50 ± 5 % rel. Luftfeuchte durchgeführt.

### Klebkräfte

Die Klebkräfte werden analog ISO 29862 (Methode 3) bei 23 °C und 50 % relativer Luftfeuchte bei einer Abzugsgeschwindigkeit von 300 mm/min und einem Abzugswinkel von 180° bestimmt. Die Dicke der Primerschicht beträgt dabei 15 beziehungsweise 25 µm. Als Verstärkungsfolie wird eine geätzte PET-Folie mit einer Dicke von 36 µm verwendet, wie sie von der Firma Coveme (Italien) erhältlich ist.

Als Substrat werden Stahlplatten (50 mm x 125 mm x 1,1 mm) entsprechend der Norm verwendet. Die Verklebung des Messstreifens (13 mm) wird dabei mittels einer Anrollmaschine mit 4 kg bei einer Temperatur von 23 °C vorgenommen. Die Zeit zwischen dem letzten Überrollen des Klebebandes und dem Abziehen beträgt 60 Minuten. Der Messwert (in N/cm) ergab sich als Mittelwert aus drei Einzelmessungen. Ermittelt wurde neben der Klebkraft die Art des Versagens der Klebverbindung.

### K-Wert

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Im Folgenden wird die Erfindung durch Beispiele näher erläutert, ohne die Erfindung damit einschränken zu wollen.

### Beispiele

Basispolymere für Primer:
- Haftklebstoff für Primer (Haftklebstoff 1)

Zur Herstellung des erfindungsgemäß im Primer enthaltenen Haftklebstoff-Copolymerisats wurden die folgenden Rohstoffe verwendet:
- 70 Gew.-% n-Butylacrylat, (CAS: 141-32-2) und
- 30 Gew.-% VINYLCAPROLACTAM (CAS: 2235-00-9)

Das Copolymerwurde in dem Fachmann bekannterweise in einem Lösungsmittelgemisch aus Ethylacetat/Isopropylalkohol (168/1) mittels radikalischer Polymerisation hergestellt. Das Copolymer weist einen K-Wert von etwa 84 auf und ist auf einen Feststoffgehalt (FG) von 30 Gew.-% eingestellt.

Das Copolymer zeigt im Klebkrafttest beschichtet in einer Dicke von 25 µm auf geätztem PET-Film (36 µm) eine Klebkraft von 2,5 N/cm. Es handelt sich also um eine Haftklebemasse.

### Primer-Polymer 2 für ein Vergleichsbeispiel

Zur Herstellung der Primerbasis des Vergleichsbeispiels wurde das thermoplastische Copolyamid Platamid M 1276 (von Arkema) in einem Lösungsmittelgemisch aus
60 Gew.-% Ethanol,
18 Gew.- % Isopropanol,
18 Gew. -% Methylcyclohexan und
4 Gew.- % Wasser
gelöst und auf einen Feststoffgehalt (FG) von 15 Gew.- % eingestellt.

### Primerformulierung

Zur Herstellung der erfindungsgemäßen Primer wurden die hinsichtlich ihrer Herstellung und Zusammensetzung oben beschriebenen Basispolymere sowie die folgenden Rohstoffe, Lösemittel und Treibmittel verwendet:
- Titantetraisopropanolat (TYZOR^{®} TPT, Lehmann & Voß, CAS 546-68-9)
- Isopropylalkohol (CAS 67-63-0)
- Mikroballons der Firma Matsumoto Typ FN100SSD
   (Size: 6 bis 11 µm, Tstart: 120 bis 130 °C, Tₘₐₓ 145 bis 155 °C)
- Mikroballons der Firma Matsumoto Typ FN 100 SD
   (Size: 10 bis 20 µm, Tstart: 125 bis 135 °C, Tₘₐₓ: 150 bis 160 °C)

Zur Herstellung der erfindungsgemäßen Primer wurde der Primer-Haftklebstoff 1 zusätzlich zu den in den Primer-Haftklebstoffen enthaltenen Lösemitteln noch mit Isopropylalkohol auf einen Feststoffgehalt (FG) von 10 Gew.-% verdünnt.

Die Feststoffgehalte wurden bei sämtlichen Beispielen jeweils so gewählt, dass eine ausreichende Schichtbildung ermöglicht wurde, sodass die entsprechenden Vergleichsversuche durchgeführt werden konnten.

Die in den Beispielen angegebenen Rohstoffe/ Komponenten wurden mit einem Magnetrührer der Firma IKA^{®} unter Verwendung eines Magnetrührstabes etwa 20 Minuten gemischt.

### Beispiel 1

**Zusammensetzung des Primers:**

| Rohstoff / Komponente | Gew.-% |
|---|---|
| Lösung Primer-Haftklebstoff 1 (FG 10,0 Gew.-%) | 89,60 |
| Tyzor TPT | 0,40 |
| Matsumoto FN 100 SSD | 10,00 |

### Beispiel 2

**Zusammensetzung des Primers:**

| Rohstoff / Komponente | Gew.-% |
|---|---|
| Lösung Primer-Haftklebstoff 1 (FG 10,0 Gew.-%) | 89,60 |
| Tyzor TPT | 0,40 |
| Matsumoto FN 100 SD | 10,00 |

### Beispiel 3

**Zusammensetzung des Primers:**

| Rohstoff / Komponente | Gew.-% |
|---|---|
| Lösung Primer-Haftklebstoff 1 (FG 10,0 Gew.-%) | 97,10 |
| Tyzor TPT | 0,40 |
| Matsumoto FN 100 SD | 2,5 |

### Beispiel 4 (Vergleichsbeispiel)

**Zusammensetzung des Vergleichsprimers:**

| Rohstoff / Komponente | Gew.-% |
|---|---|
| Lösung Primer-Polymer 2 (FG 15,0 Gew.-%) | 90 |
| Matsumoto FN 100 SSD | 10 |

Über die angegebenen Feststoff-Gehalte der jeweiligen Polymere in Lösung lassen sich jeweils die Gewichtsanteile von Mikroballons zu Basispolymeren in den Primer-Zusammensetzungen eindeutig bestimmen.

### Herstellung der Prüfkörper

Die Herstellung einer Schicht mit dem erfindungsgemäßen Primer erfolgt in dem Fachmann bekannter Weise, indem auf einem Substrat (Stahlplatte) zunächst der Primer in definierter Schichtdicke aufgebracht wird (mittels Rakeltechnik). Im Anschluss lässt man das oder die Lösemittel verdunsten, woraufhin das Testklebeband auf den nunmehr mit dem getrockneten Primer in einer Schichtdicke von 15 beziehungsweise 25 µm versehene Substrat appliziert werden kann. Zwischen Aufbringen und Verdunsten des Lösemittels und der Applikation des Testklebebandes können nur wenige Minuten, aber auch einige Tage oder Wochen liegen.

Das Testklebeband, mit dem die Primer geprüft wurden, basiert auf einem Polyacrylat-Haftklebstoff. Es handelt sich um das Acrylatschaumklebeband tesa^{®} 75120. tesa^{®} 75120 ist ein doppelseitiges schwarzes Klebeband, das aus einem hochstoßdämpfenden schwarzen Acrylatschaum besteht.

Die Dicke liegt bei 200 µm.

Die Klebkraft auf Stahl (initial) liegt bei 13 N/cm, die Klebkraft auf Polycarbonat (initial) bei 10,9 N/cm.

### Aktivierung der Treibmittel

Zur Aktivierung der Treibmittel wurden die Prüfkörper für 5 Minuten bei 150 °C in einem Umluftofen gelagert. Durch das Aktivieren der Treibmittel wird die gemessene Klebkraft reduziert. Nach der thermischen Aktivierung erfolgt das Messen der Klebkraft bei Raumtemperatur vorzugsweise nach einer Abkühlzeit von 5 Minuten.

Alternativ, wenn es sich bei dem Substrat um ein thermisch leitfähiges Substrat handelt, können die Treibmittel auch durch Platzieren der Prüfkörper auf einer Präzisionsheizplatte (1 Minute bei 155°C) aktiviert werden.

Zur Charakterisierung der erfindungsgemäß hergestellten Muster wurden Klebkräfte vor und nach Aktivierung im Umluft-Heizofen bestimmt. Dabei wurden die folgenden Ergebnisse erhalten:

| Primer | Schichtdicke | vor Aktivierung | nach Aktivierung (5 min, 150 °C) |
|---|---|---|---|
| Beispiel 1 | 15 µm | 9,6 N/cm (A) | 0,4 N/cm (A) |
| Beispiel 2 | 25 µm | 10,1 N/cm (A) | 0,6 N/cm (A) |
| Beispiel 3 | 25 µm | 13,0 N/cm (A) | 2.4 N/cm (A) |
| Vergleich Beispiel 4 | 15 µm | 9,0 N/cm (A) | 2,6 N/cm (A) |
| ohne | - | 11,5 N/cm (A) | 13,2 N/cm (A) |

| | | | |
|---|---|---|---|
| A = Adhäsive Ablösung des Klebebandes | | | |

Die Beispiele 1, 2 und 3 zeigen klar und eindeutig den Effekt, dass der erfindungsgemäße Primer zu einer deutlich stärkeren Reduzierung der Klebkraft führt als der Vergleichsprimer, insbesondere zu einer Reduzierung von mehr als 75 % der Klebkraft.

## Patentansprüche

1. Primer zur Herstellung einer lösbaren Klebverbindung, wobei der Primer auf einem Haftklebstoff basiert, der ein chemisches oder physikalisches Treibmittel umfasst.

2. Primer nach Anspruch 1, **dadurch gekennzeichnet, dass** der Haftklebstoff des Primers auf Acrylaten basiert.

3. Primer nach Anspruch 1 oder 2, **dadurch gekennzeichnet, dass** der Haftklebstoff des Primers ein Copolymer auf der Basis von Acrylsäureestern umfasst, vorzugsweise ein Copolymer von zumindest einem Acrylsäureester mit Vinylcaprolactam.

4. Primer nach zumindest einem der Ansprüche 1 bis 3, **dadurch gekennzeichnet, dass** der Haftklebstoff des Primers frei von Acrylsäure ist.

5. Primer nach einem der Ansprüche 1 bis 4, **dadurch gekennzeichnet, dass** das Treibmittel ein physikalisches Treibmittel ist, bevorzugt thermisch expandierbare, thermoplastische Mikrosphären.

6. Schichtkörper umfassend
ein erstes Bauteil,
eine Primerschicht, die auf dem Bauteil ist,
wobei der Primer auf einem Haftklebstoff basiert, der ein chemisches oder physikalisches Treibmittel umfasst, und aus einer flüssigen Phase in einer Schichtdicke (nach dem Trocknen) von nicht mehr als 30 µm aufgebracht wird,
ein Klebeband, insbesondere Haftklebeband, das über die Primerschicht mit dem ersten Bauteil verbunden ist.

7. Schichtkörper nach Anspruch 6, **dadurch gekennzeichnet, dass** auf der freien Seite des Klebebands ein zweites Bauteil verklebt ist.

8. Verfahren zum Lösen eines Schichtkörpers aus
einem ersten Bauteil,
aus einer Primerschicht, die auf dem Bauteil aufgebracht ist,
wobei der Primer auf einem Haftklebstoff basiert, der ein chemisches oder
physikalisches Treibmittel umfasst, und aus einer flüssigen Phase in einer Schichtdicke (nach dem Trocknen) von nicht mehr als 30 µm aufgebracht wird,
aus einem ersten Klebeband insbesondere Haftklebeband, das über die Primerschicht mit dem ersten Bauteil verbunden ist,
wobei der Schichtkörper erwärmt wird, bis das im Primer vorhandene Treibmittel expandiert, so dass die Klebkraft der Primerschicht soweit reduziert wird, dass das Klebeband vom Bauteil entfernbar ist.

9. Verwendung eines Schichtkörpers nach einem der Ansprüche 6 oder 7 in der Automobilindustrie, insbesondere in einem Automobil.

10. Verwendung eines Schichtkörpers nach einem der Ansprüche 6 oder 7 in der Elektronikindustrie, insbesondere in einem elektronischen Gerät.
